# EUROPÄISCHE PATENTSCHRIFT

(11) **EP 1 574 315 B1**
(45) Veröffentlichungstag und Bekanntmachung des Hinweises auf die Patenterteilung: **30.08.2006**
(21) Anmeldenummer: 04005772.1
(22) Anmeldetag: 11.03.2004
(51) Int. Cl.: B29C 47/08

(54) **Antrieb für eine Plastifiziereinheit**
Transmission for a plasticizing unit
Transmission pour une unité de plastification

(43) Veröffentlichungstag der Anmeldung: 14.09.2005
(73) Patentinhaber: Cincinnati Extrusion GmbH, 1239 Wien (AT)
(72) Erfinder: Hackl, Leopold, 3434 Katzelsdorf (AT); Padlesak, Helmut, 1100 Wien (AT); Kramer, Erhard, 61600 Brno (CZ); Lukassen, Walter, 44627 Herne (DE)
(74) Vertreter: Gosdin, Michael

(56) Entgegenhaltungen:
- EP-A- 1 180 423
- GB-A- 1 112 390
- US-A- 2 783 498
- US-A- 3 923 290
- US-B1- 6 485 287

## Beschreibung

Die Erfindung betrifft eine Plastifiziereinheit mit mindestens einer angetriebenen Schnecke, wobei eine elektrische Antriebseinheit mit mindestens einem Rotor und einem Stator angeordnet ist.

Gattungsgemäße Antriebe für eine Plastifiziereinheit sind aus dem Stand der Technik bekannt. So zeigt die **EP 1 182 027** eine Extrudervorrichtung mit Extruderschnecke und Schneckenantrieb, wobei der Schnekkenantrieb aus einem Antriebsgehäuse und einem Antriebsmotor mit Stator und Rotor besteht. Die Schnecke ist drehfest in einer Anschlußhülse gehalten, wobei sich die Anschlußhülse bei einer Rotation über Wälzlager an einem drehfesten Gehäuse abstützt. Diese Extrudervorrichtung zeichnet sich durch ein geringes Volumen und ihre Einfachheit aus. Sie kann funktionssicher und störungsfrei betrieben werden.

Das Dokument EP 1 180 423 offenbart auch eine solche Extrudervorrichtung mit Extruderschnecke und Schneckenantrieb.

Während des Betreibens der Extrusionsvorrichtung treten über die Schnecke eingeleitete Axialkräfte auf. Diese Kräfte werden über Axiallager, die sich ebenso wie die Wälzlager an dem drehfesten Gehäuse abstützen, aufgenommen. Die Höhe der aufnehmbaren Axialkräfte richtet sich nach der Bauart der Axiallager. Hierbei spielt die Größe der Lager eine entscheidende Rolle. Nachvollziehbarerweise können große Axiallager auch größere Axialkräfte aufnehmen. Die kompakte Bauweise des hier vorgeschlagenen Antriebes läßt hier wenig Freiraum für die Variierung der Baugröße des Axiallagers.

Die **Aufgabe** der Erfindung liegt darin, einen Antrieb für eine Plastifiziereinheit bereitzustellen, der möglichst wenig bewegte Bauteile verwendet.

Die **Lösung** der Aufgabe ist der Gegenstand vom Anspruch 1.

Vorteilhafterweise ist der elektrische Antrieb nach unten angeordnet und ist somit weitgehend lotrecht. Es ist aber auch denkbar, den elektrischen Antrieb noch oben, also oberhalb der Schnecke anzuordnen, falls eine Plastifiziereinheit mit niedrig bauender Schneckenachse benötigt wird. In beiden Fällen ist der elektrische Antrieb über ein Winkelgetriebe mit der Schnecke verbunden, wobei die Schnecke über eine als Hohlwelle ausgeführte Abtriebswelle angetrieben wird. Die Lagerung der Abtriebswelle erfolgt mittels Axiallager, die sich an einem Lagerdeckel abstützen.

Durch diese Anordnung werden die beweglichen Teile des Antriebs aus dem Bereich, der sich direkt an die Antriebswelle für die Schnecke erschließt, gebracht, wodurch genügend Freiraum für den Einsatz unterschiedlicher Größen von Axiallagern geschaffen wird. Da sich das Axiallager am Lagerdeckel abstützt, ist ein einfacher Wechsel des Lagers möglich, da lediglich ein für ein größeres Lager ausgeführter Lagerdeckel eingesetzt werden muss. Dies hat den Vorteil, dass relativ große über die Schnecke eingeleitete Axialkräfte aufnehmbar sind.

Die elektrische Antriebseinheit ist über ein Winkelgetriebe mit der Schnecke in Wirkverbindung. Die Wirkverbindung erstreckt sich vom Rotor über eine Antriebswelle mit dem Winkelgetriebe. Der Rotor ist über diese Antriebswelle gelagert. Die Lager stützen sich an drehfesten Gehäusen bei der Rotation des Rotors ab.

Der Stator des elektrischen Antriebs dient gleichzeitig als Abstützung für das Winkelgetriebe und macht daher einen eigenständigen Maschinenrahmen entbehrlich. Hierdurch wird die Lagerung des Rotors kostengünstiger und kann kleiner bauen und kann somit relativ einfach auf die Anwenderbedürfnisse abgestimmt werden. Ist die Achse des elektrischen Antriebs nicht lotrecht ausgeführt, da dies beispielsweise bauliche Bedingungen erfordern, kann auch auf eine nicht lotrechte Ausführung zurückgegriffen werden. In diesem Fall ist es aber nötig, eine zusätzliche Lagerung im unteren Bereicht des elektrischen Antriebs anzuordnen, damit die Querkräfte aufgenommen werden können.

Als Winkelgetriebe wird ein einstufiges Untersetzungsgetriebe vorgeschlagen. Den elektrischen Antrieb bildet vorteilhafterweise ein Torquemotor, der ober- oder unterhalb der Schnecke angeordnet sein kann, wodurch das Eigengewicht des Rotors in Achsrichtung wirkt und somit keine Biegung auftritt.

Die vorgeschlagene Lösung ermöglicht den Einsatz unterschiedlich großer Axiallager und den Einsatz von kleinen Antriebsmotoren durch die einstufige Untersetzung im Getriebe. Dadurch baut auch die gesamte Plastifiziereinheit, insbesondere Extruder, schmaler. Durch die vertikale Lagerung der Motorachse werden keine Lager für den Rotor benötigt. Diese Funktion übernimmt die Lagerung der Antriebswelle des Winkelgetriebes. Die gesamte Maschine baut kürzer, da der Motor eben nach unten oder nach oben und nicht nach hinten ragt. Es ist weiterhin ein einfacherer Maschinenrahmen einsetzbar, da der Stator, bei einer Ausrichtung des Motors nach unten, die Funktion eines Podestes übernimmt. Dadurch, dass keine Lagerungen im Motor erforderlich sind, ist der Motor selbst weitgehend wartungsfrei. Die Wartungsintervalle des gesamten Getriebes sind im Vergleich zum mehrstufigen Getriebe verlängert. Dies ist insbesondere darauf zurückzuführen, dass das einstufige Getriebe kombiniert mit dem eingesetzten Torque-Motor niedrig drehend ist.

In den Zeichnungen sind schematisch zwei Ausführungsbeispiele der Erfindung wiedergegeben.
- Fig. 1: zeigt einen Teil einer Plastifiziereinheit mit einem kleineren Axiallager, und
- Fig. 2: zeigt einen Teil einer Plastifiziereinheit mit einem größeren Axiallager.

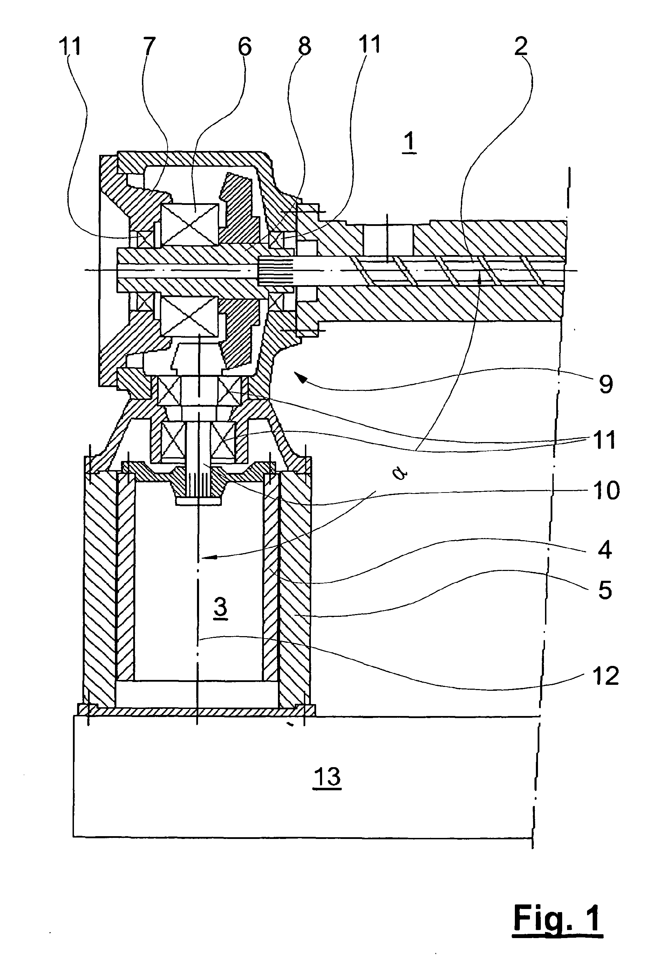

In Figur 1 ist schematisch eine Plastifiziereinheit 1 dargestellt. Die Plastifiziereinheit weist eine Schnecke 2 auf, die über einen elektrischen Antrieb 3 in Rotation versetzbar ist. Der elektrische Antrieb besteht aus einem Stator 5, der gleichzeitig als Podest für das Getriebe dient, und einem im Stator rotierenden Rotor 4, der über eine Antriebswelle 10 mit einem Winkelgetriebe 9 in Verbindung steht. Über dieses Winkelgetriebe 9 wird die Kraft auf eine Abtriebswelle 8, die als Hohlwelle ausgeführt ist, übertragen, in der kraftschlüssig die Schnecke 2 angeordnet ist. Sowohl die Antriebswelle 10 als auch die Abtriebswelle 8 des Winkelgetriebes 9 sind mittels Lager 11, vorzugsweise Wälzlager, abgestützt.

Die über die Schnecke 2 eingeleitete Axialkraft kann sich über das Axiallager 6 am fest am Gehäuse montierten Lagerdeckel 7 abstützen. Durch diese Bauart wird genügend Freiraum geschaffen, um unterschiedlich große Axiallager 6 einzusetzen.

Die vorzugsweise rechtwinklige Anordnung des elektrischen Antriebs 3 zur Schnecke 2 und im wesentlichen lotrechte Ausrichtung, in diesem Fall ist die Ausrichtung auch senkrecht zum Maschinenbett, ermöglicht eine kurz bauende Plastifiziereinheit 1.

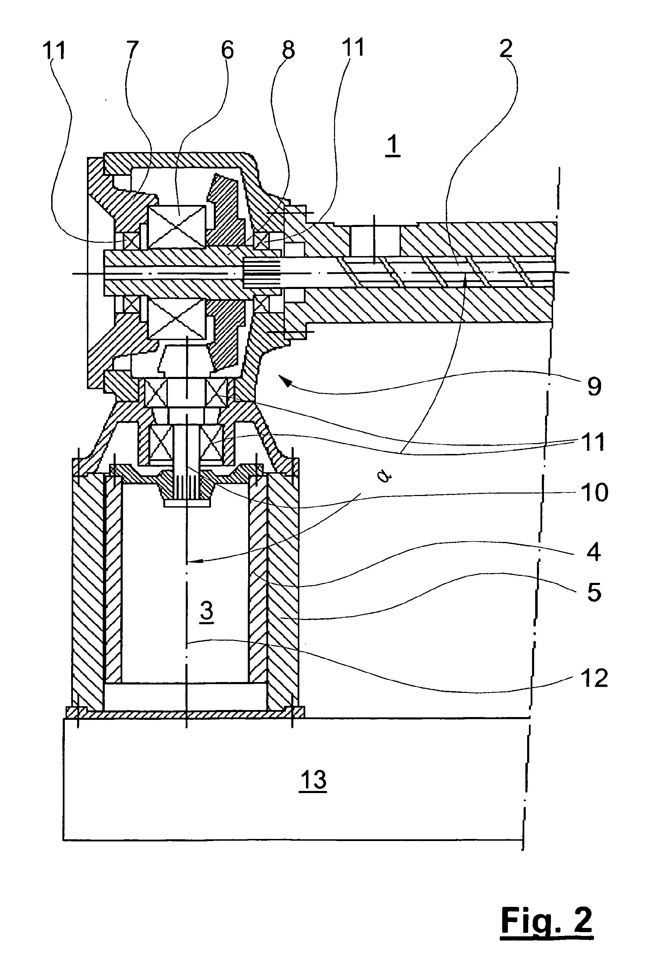

Das Ausführungsbeispiel gem. Fig. 2 entspricht weitgehend dem Ausführungsbeispiel gem. Fig. 1. Hier wurde jedoch eine Plastifiziereinheit 1 mit einem größeren Axiallager 6 dargestellt. Der Lagerdeckel 7 ist entsprechend angepaßt und stellt die Aufnahme der Axialkräfte ebenfalls sicher.

In beiden Ausführungsbeispielen ist deutlich zu erkennen, dass der Rotor 4 keiner separaten Lagerung bedarf, da er über die Antriebswelle 10 des Winkelgetriebes 9 gehalten wird.

Der vorgeschlagene Antrieb einer Plastifiziereinheit eignet sich besonders für den Antrieb von Extrudern, wie sie in der Kunststoffverarbeitung, beispielsweise bei der Rohr- oder Profilextrusion, eingesetzt werden. Der flexible Einsatz der Größen von Axiallagern durch den einfachen Austausch des Lagers und des entsprechenden Lagerdeckels ermöglicht es, den Extruder auf die individuellen Bedürfnisse anzupassen und die durch den Massedruck aufgebrachten Axialkräfte aufzunehmen.

### Bezugszeichenliste:

- 1: Plastifiziereinheit
- 2: Schnecke
- 3: elektrischer Antrieb
- 4: Rotor
- 5: Stator
- 6: Axiallager
- 7: Lagerdeckel
- 8: Abtriebswelle von 9
- 9: Winkelgetriebe
- 10: Antriebswelle von 9
- 11: Lager
- 12: Achse von 3
- 13: Maschinenbett

- α: Winkel zwischen 2 und 3

## Patentansprüche

1. Plastifiziereinheit (1) mit mindestens einer angetriebenen Schnecke (2), wobei eine elektrische Antriebseinheit (3) mit mindestens einem Rotor (4) und einem Stator (5) angeordnet ist, wobei
die elektrische Antriebseinheit (3) in einem Winkel (α) zur Schnecke (2) angeordnet ist,
**dadurch gekennzeichnet, dass** die elektrische Antriebseinheit (3) **die Schnecke (2) antreibt,**
**wobei der Rotor (4) mit der Antriebswelle (10) des Winkelgetriebes (9) in Verbindung steht und somit keine eigenen Lagerstellen aufweist.**

2. Plastifiziereinheit (1) nach Anspruch 1, **dadurch gekennzeichnet, dass** die Achse (12) des elektrischen Antriebs (3) weitgehend lotrecht ist.

3. Plastifiziereinheit (1) nach Anspruch 1 oder 2, **dadurch gekennzeichnet, dass** der elektrische Antrieb (3) über ein Winkelgetriebe (9) mit der Schnecke (2) in Verbindung steht.

4. Plastifiziereinheit (1) nach Anspruch 3, **dadurch gekennzeichnet, dass** der elektrische Antrieb (3) über eine Antriebswelle (10) mit dem Winkelgetriebe (9) in Wirkverbindung steht.

5. Plastifiziereinheit (1) nach mindestens einem der Ansprüche 1 bis 4, **dadurch gekennzeichnet, dass** der Stator (5) als Abstützung für das Winkelgetriebe (9) ausgeführt ist.

6. Plastifiziereinheit (1) nach mindestens einem der vorigen Ansprüche, **dadurch gekennzeichnet, dass** das Winkelgetriebe (9) ein einstufiges Untersetzungsgetriebe ist.

7. Plastifiziereinheit (1) nach einem der vorigen Ansprüche, **dadurch gekennzeichnet, dass** der elektrische Antrieb (3) ein Torquemotor ist.

8. Plastifiziereinheit (1) nach einem der vorigen Ansprüche, **dadurch gekennzeichnet, dass** der elektrische Antrieb (3) oberhalb oder unterhalb der Schnecke (2) angeordnet ist.

9. Plastifiziereinheit (1) nach einem der vorigen Ansprüche, **dadurch gekennzeichnet, dass** die Schnecke (2) über eine als Hohlwelle ausgeführte Abtriebswelle (8) des Winkelgetriebes (9) angetrieben wird.

10. Plastifiziereinheit (1) nach Anspruch 9, **dadurch gekennzeichnet, dass** die Abtriebswelle (8) mit einem Axiallager (6) in Verbindung steht, das sich an einem Lagerdeckel (7) abstützt.

## Claims

1. Plastifying unit (1) having at least one driven screw (2), wherein an electric drive unit (3) having at least one rotor (4) and a stator (5) is arranged, wherein the electric drive unit (3) is arranged at an angle (α) to the screw (2), **characterised in that** the electric drive unit (3) drives the screw (2), wherein the rotor (4) is connected to the drive shaft (10) of the angular gear (9) and hence has no separate bearing points.

2. Plastifying unit (1) according to claim 1, **characterised in that** the axis (12) of the electric drive (3) is largely vertical.

3. Plastifying unit (1) according to claim 1 or 2, **characterised in that** the electric drive (3) is connected to the screw (2) via an angular gear (9).

4. Plastifying unit (1) according to claim 3, **characterised in that** the electric drive (3) is in operative connection with the angular gear (9) via a drive shaft (10).

5. Plastifying unit (1) according to at least one of claims 1 to 4, **characterised in that** the stator (5) is designed as a support for the angular gear (9).

6. Plastifying unit (1) according to at least one of the previous claims, **characterised in that** the angular gear (9) is a single-stage reducing gear.

7. Plastifying unit (1) according to one of the previous claims, **characterised in that** the electric drive (3) is a torque motor.

8. Plastifying unit (1) according to one of the previous claims, **characterised in that** the electric drive (3) is arranged above or below the screw (2).

9. Plastifying unit (1) according to one of the previous claims, **characterised in that** the screw (2) is driven via a drive shaft (8), designed as a hollow shaft, of the angular gear (9).

10. Plastifying unit (1) according to claim 9, **characterised in that** the drive shaft (8) is connected to an axial bearing (6), which is supported on a bearing cover (7).

## Revendications

1. Dispositif de plastification (1) comportant au moins une vis sans fin entraînée (2), dans lequel est monté un dispositif électrique d'entraînement (3) qui comprend au moins un rotor (4) et un stator (5) et fait un angle (α) avec la vis (2), **caractérisé par le fait que** le dispositif électrique d'entraînement (3) entraîne la vis (2), le rotor (4) étant lié à l'arbre d'entraînement (10) de l'engrenage d'angle (9) et ainsi ne présentant pas de points d'appui propres.

2. Dispositif de plastification (1) selon la revendication 1, **caractérisé par le fait que** l'axe (12) du dispositif électrique d'entraînement (3) est sensiblement vertical.

3. Dispositif de plastification (1) selon l'une des revendications 1 et 2, **caractérisé par le fait que** le dispositif électrique d'entraînement (3) est relié à la vis (2) par un engrenage d'angle (9).

4. Dispositif de plastification (1) selon la revendication 3, **caractérisé par le fait que** le dispositif électrique d'entraînement (3) est en liaison active avec l'engrenage d'angle (9) par l'intermédiaire d'un arbre d'entraînement (10).

5. Dispositif de plastification (1) selon au moins une des revendications 1 à 4, **caractérisé par le fait que** le stator (5) sert d'appui pour l'engrenage d'angle (9).

6. Dispositif de plastification (1) selon au moins une des revendications précédentes, **caractérisé par le fait que** l'engrenage d'angle (9) est un engrenage réducteur à un seul étage.

7. Dispositif de plastification (1) selon l'une des revendications précédentes, **caractérisé par le fait que** le dispositif électrique d'entraînement (3) est un moteur de couple.

8. Dispositif de plastification (1) selon l'une des revendications précédentes, **caractérisé par le fait que** le dispositif électrique d'entraînement (3) est placé au-dessus ou au-dessous de la vis (2).

9. Dispositif de plastification (1) selon l'une des revendications précédentes, **caractérisé par le fait que** la vis (2) est entraînée par l'intermédiaire d'un arbre de sortie creux (8) de l'engrenage d'angle (9).

10. Dispositif de plastification (1) selon la revendication 9, **caractérisé par le fait que** l'arbre de sortie (8) est lié à un palier de butée (6) qui s'appuie sur un couvercle de palier (7).
